# EUROPEAN PATENT APPLICATION

(11) **EP 2 663 083 A2**
(43) Date of publication of application: **13.11.2013**
(21) Application number: 12732492.9
(22) Date of filing: 06.01.2012
(51) Int. Cl.: H04N 17/00, H04N 21/258

(54) **APPARATUS AND METHOD FOR AUDIENCE MEASUREMENT IN MULTIMEDIA STREAMING SYSTEM**

(30) Priority: 07.01.2011 KR 20110001704; 10.01.2011 KR 20110002144
(71) Applicant: Samsung Electronics Co., Ltd, Gyeonggi-do 443-742 (KR)
(72) Inventor: HWANG, Sung-Oh, Yongin-si Gyeonggi-do 448-712 (KR); SONG, Jae-Yeon, Seoul 135-795 (KR)
(74) Representative: Nederlandsch Octrooibureau
(86) International application number: PCT/KR2012/000160
(87) International publication number: WO 2012/093892

(57) **Abstract**

An apparatus and a method for performing audience measurement (AM) in a multimedia streaming system are provided. In a method for operating a terminal in the multimedia streaming system, a transmission stream including contents is received. At least one of audience measurement participation information and audience measurement execution information is obtained from at least one signaling table included in the transmission stream.

## Description

### BACKGROUND OF THE INVENTION

### 1. Field of the Invention

The present invention relates to a multimedia streaming system. More particularly, the present invention relates to an apparatus and a method for audience measurement (AM) in a multimedia streaming system.

### 2. Description of the Related Art

A recent multimedia service considers a service for providing appropriate multimedia contents or providing appropriate advertisements based on a user's consumption pattern. For this purpose, a technology for analyzing a user's consumption pattern is audience measurement.

Recently, with development of a digital communication technology, a method of directly measuring a user's consumption pattern via an on-line has been possible. Generally, in case of performing audience measurement via an on-line, a user and a system set separate connection besides connection set for a multimedia service, and the user transmits information regarding the user's consumption pattern via the separate connection. That is, there exist problems of a signaling overhead for setting the separate connection for audience measurement, and consumption of a communication resource, etc. Also, in performing audience measurement, there exist problems of protection of data including measurement results, reliability of a measurement object, etc.

### SUMMARY OF THE INVENTION

An aspect of the present invention is to address at least the above-mentioned problems and/or disadvantages and to provide at least the advantages described below. Accordingly, an aspect of the present invention is to provide an apparatus and a method for protecting measurement data when audience measurement is performed in a multimedia streaming system.

Another aspect of the present invention is to provide an apparatus and a method for providing information regarding audience measurement using connection set for transmitting multimedia data in a multimedia streaming system.

Still another aspect of the present invention is to provide an apparatus and a method for encrypting audience measurement related data in a multimedia streaming system.

In accordance with an aspect of the present invention, a method for operating a terminal in a multimedia streaming system is provided. The method includes receiving a transmission stream including contents, and obtaining at least one of audience measurement participation information and audience measurement execution information from at least one signaling table included in the transmission stream.

In accordance with another aspect of the present invention, a method for operating a server in a multimedia streaming system is provided. The method includes generating at least one signaling table including at least one of audience measurement participation information and audience measurement execution information, generating a transmission stream including at least one signaling table, and transmitting the transmission stream.

In accordance with still another aspect of the present invention, a terminal apparatus in a multimedia streaming system is provided. The apparatus includes a communication unit for receiving a transmission stream including contents, and a controller for obtaining at least one of audience measurement participation information and audience measurement execution information from at least one signaling table included in the transmission stream.

In accordance with further another aspect of the present invention, an operation apparatus of a server in a multimedia streaming system is provided. The operation apparatus includes a controller for generating at least one signaling table including at least one of audience measurement participation information and audience measurement execution information, and generating a transmission stream including at least one signaling table, and a communication unit for transmitting the transmission stream.

The present invention may prevent waste of a resource and a signaling time by separate connection setting by providing specific indicate information for performing audience measurement via a transmission stream transferring contents in a multimedia streaming system. Also, the present invention may improve reliability in audience measurement and reinforce security even more by providing preliminary information for audience measurement via a transmission stream transferring contents and performing the audience measurement using this in a multimedia streaming system.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings in which:
FIG. 1 is a view illustrating a schematic structure of a transmission stream in a multimedia streaming system according to an embodiment of the present invention;
FIGS. 2A to 2C are views illustrating an example of configuration of audience measurement execution information in a multimedia streaming system according to an embodiment of the present invention;
FIG. 3 is a view illustrating signal exchange for indicating and performing audience measurement in a multimedia streaming system according to an embodiment of the present invention;
FIG. 4 is a flowchart illustrating a procedure for operating a terminal performing audience measurement in a multimedia streaming system according to an embodiment of the present invention;
FIG. 5 is a flowchart illustrating a procedure for operating a server instructing audience measurement in a multimedia streaming system according to an embodiment of the present invention;
FIG. 6 is a view illustrating a signal exchange procedure for providing information required for audience measurement in a multimedia streaming system according to an embodiment of the present invention;
FIG. 7 is a flowchart illustrating a procedure for operating a terminal obtaining audience measurement related information in a multimedia streaming system according to an embodiment of the present invention;
FIG. 8 is a flowchart illustrating a procedure for operating an audience measurement related information provider in a multimedia streaming system according to an embodiment of the present invention;
FIG. 9 is a block diagram of a terminal in a multimedia streaming system according to an embodiment of the present invention; and
FIG. 10 is a block diagram illustrating a streaming server and an audience measurement participation server in a multimedia streaming system according to an embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein may be made without departing from the scope and spirit of the invention. Also, descriptions of well-known functions and constructions are omitted for clarity and conciseness.

Exemplary embodiments of the present invention provide a technology for protecting measurement data during audience measurement and preventing resource waste by separate connection setting in a multimedia streaming system. Hereinafter, for convenience in description, the present invention uses terminologies and titles defined by a Moving Picture Experts Group (MPEG)-2 standard. However, the present invention is not limited to the terminologies and titles and is also applicable to a multimedia streaming system according to other standards.

In a multimedia streaming system according to an embodiment of the present invention, a transmission stream transferred to a reception end includes video, audio, control information, user information, etc. That is, a transmission end generates a transmission stream by multiplexing the video, audio, control information, user information, etc., and transmits the transmission stream to at least one reception end. At this point, a link between the transmission end and the reception end may include a radio frequency link, a satellite digital broadcast link, a cable Television (TV) network, a standard ground wave communication link, an ultrahigh frequency link, a packet network link such as an Internet Protocol (IP) network, etc.

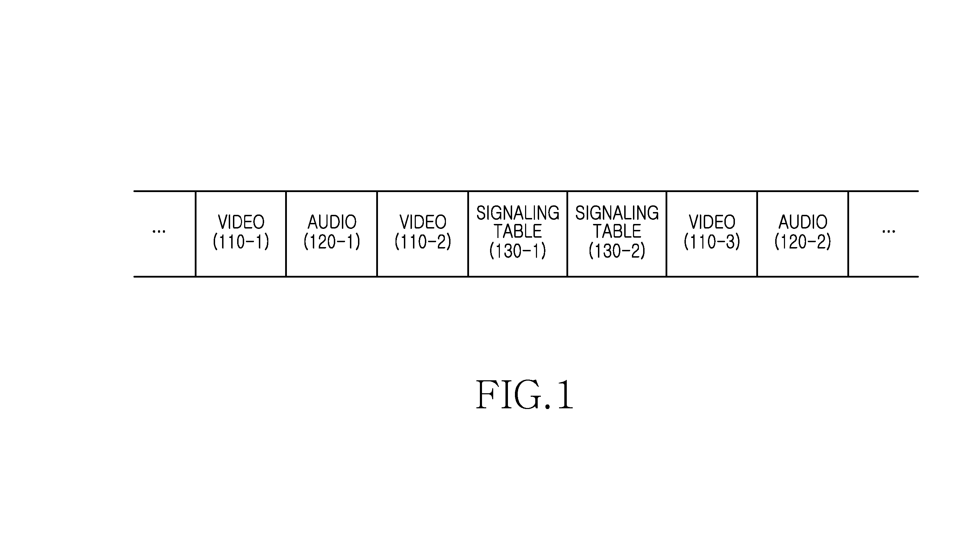

For example, the transmission stream may be configured as illustrated in FIG. 1. FIG. 1 illustrates a schematic structure of a transmission stream in a multimedia streaming system according to an embodiment of the present invention. Referring to FIG. 1, the transmission stream includes at least one video packet 110, at least one audio packet 120, and at least one signaling table 130. The video packet 110 includes a compressed video stream, and the audio packet 120 includes a compressed audio stream. The signaling table 130 provides information representing a program to which the video packet 110 and the audio packet 120 correspond. The signaling table 130 may be denoted by Program Specific Information (PSI), MPEG PSI, Advanced Television System Committee (ATSC) Program and System Information Protocol (PSIP), Digital Video Broadcasting (DVB) PSI/System Information (SI), etc. For example, the signaling table 130 may include Program Association Table (PAT) providing identify information of packets including other signaling tables, program related information, for example, a Program Map Table (PMT) providing identify information of packets including audio and video of a specific program, a Network Information Table (NIT) providing network related information like a transmission frequency, a Conditional Access Table (CAT) providing information for accessing a program, etc.

A transmission end according to the present invention may provide information instructing to perform audience measurement using the signaling table included in the transmission stream. In other words, the transmission end provides specific indicate information regarding the audience measurement execution using the signaling table to a reception end that obtains system/service/program information via the signaling table. For example, the specific indicate information regarding the audience measurement execution may be provided to only a user's terminal who has agreed to the audience measurement. For convenience in description, the present invention refers to the 'specific indicate information regarding the audience measurement execution' as 'audience measurement (AM) execution information'.

The AM execution information may be added to other signaling tables and transferred. Alternatively, the AM execution information may be transferred as a newly defined table. Furthermore, in the case where the AM execution information is transferred as the newly defined table, the AM execution information may be configured as one table or a plurality of tables. In the case where the AM execution information is transferred as newly defined at least one table, the table may be referred to as an 'Audience Measurement Execution Table (AMET)'. For convenience in description, the present invention refers to the 'newly defined table for the AM execution information' as the 'AMET'. For example, the AM execution information may include items of Table 1.

**<Table 1>**

| field | length | description |
|---|---|---|
| business identifier | variable | business identifier or a server identifier instructing audience measurement |
| list of services and contents for audience measurement | variable | list of service identifier and contents identifiers used in a signaling table. contents of from one service to multiple services may be included. |
| measurement item for audience measurement | variable | items in which audience measurement may be applied and may be specifically determined according to business intention and necessity. |
| | | (ex: when, who, where, what, how long, how many, etc.) |
| method of audience measurement report | variable | server address will be reported the audience measurement result information can determine the point of transmitting the audience measurement result saving method of the audience measurement result |

Referring to Table 1, the AM execution information includes 1) information regarding information-business identifier regarding a business requiring audience measurement, a server identifier, etc., 2) information regarding a service and contents to which audience measurement is to be applied, 3) information regarding a measurement item on which audience measurement is to be performed, and 4) a result report method after audience measurement, etc. For example, the service corresponds to a broadcast channel, and the contents correspond to a broadcast program. The four items may be transferred as a portion of a table defined for other purposes, or may be transferred via at least one newly defined table (ex: AMET). For example, in the case where all of the four items are not transmitted according to the same period, a plurality of newly defined tables may be used.

'AM object service and contents list' among audience measurement execution information shown in Table 1 may be configured as in Table 2 below.

**<Table 2>**

| upper field | value | lower field | value |
|---|---|---|---|
| AM allowed service | service identifier | AM allowed contents | contents identifier |
| | | AM not-allowed contents | contents identifier |
| AM not-allowed service | service identifier | | |

Referring to Table 2, the 'AM object service and contents list' roughly includes information discriminating an AM allowed service and an AM not-allowed service, and includes information discriminating allowed contents and not-allowed contents among contents included in the AM allowed service. That is, the 'AM allowed service' denotes a list of services on which audience measurement may be performed, and the 'AM not-allowed service' denotes a list of services on which the audience measurement should not be performed. For example, a service having a possibility that personal information (ex: religious·political tendency) related to a user's private life may be exposed in the case where the audience measurement is performed may be classified as the service on which the audience measurement should not be performed. Since audience measurement may not be allowed for specific contents even in case of the service on which the audience measurement may be performed, the 'AM allowed contents' field and the 'AM not-allowed contents' field are provided.

'measurement item of AM' among the audience measurement execution information shown in Table 1 may be configured as in Table 3 below.

**<Table 3>**

| field | description |
|---|---|
| Who | identity information of terminal owner or terminal performing audience measurement |
| Where | place for performing audience measurement |
| What | object service or contents for performing audience measurement |
| When | viewing start time of object service or contents for performing audience measurement |
| How long | viewing time of audience measurement object service or contents |
| How many | the number of times of viewing or a viewing frequency of audience measurement object service or contents |

'AM result report method' among the audience measurement execution information shown in Table 1 may be configured as in Table 4 below.

**<Table 4>**

| field | | description |
|---|---|---|
| report | reporter | identify information of user or terminal reporting audience measurement result |
| | report item | reporting item among measurement item |
| report method | report right after completion | report to the audience measurement server right after completion of the audience measurement |
| | report in delayed timing after completion | algorithm 1 : determine randomly a report timing using terminal identifier information |
| | | algorithm 2 :determine a report timing in accordance with general random algorithm |
| | save in a terminal | save in a terminal before report request |
| report destination | audience measurement server address | server address receiving measurement report |

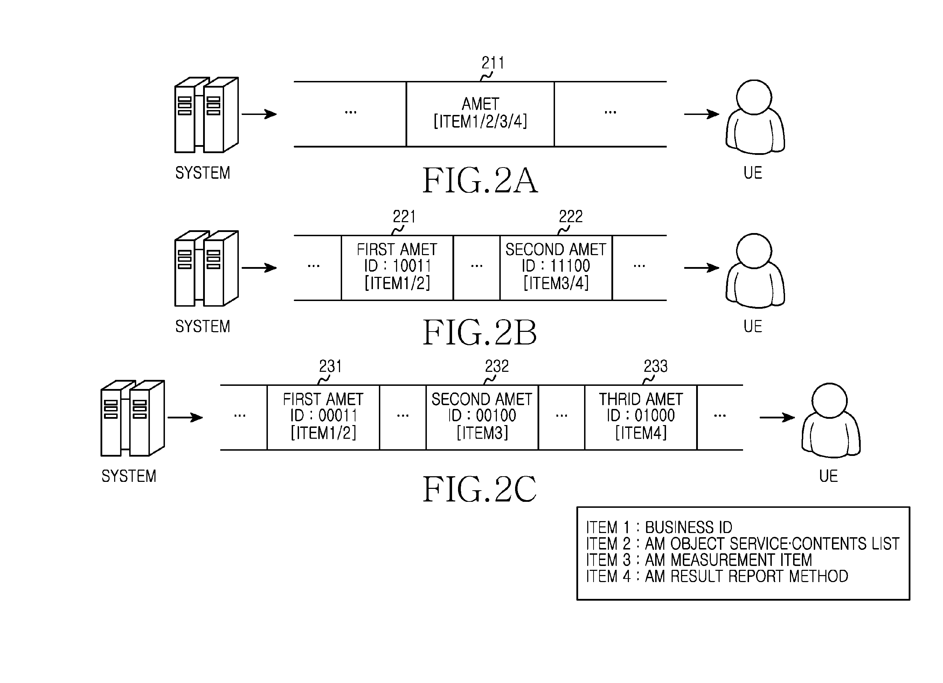

FIGS. 2A to 2C illustrate an example of configuration of audience measurement execution information in a multimedia streaming system according to an embodiment of the present invention. FIG. 2A illustrates a transmission stream in the case where the audience measurement execution information is configured using one table, FIG. 2B illustrates a transmission stream in the case where the audience measurement execution information is configured using two tables, and FIG. 2C illustrates a transmission stream in the case where the audience measurement execution information is configured using three tables. In FIGS. 2A to 2C, items 1 to 4 are items that may be included in the audience measurement execution information shown in Table 1. The item 1 denotes a business identifier, the item 2 denotes an AM object service and contents list, the item 3 denotes an AM measurement item, and the item 4 denotes an AM result report method.

Referring to FIG. 2A, an AMET 211 includes all of the items 1 to 4. The AMET 211 is multiplexed together with a video packet, an audio packet, etc. and included in a transmission stream. The transmission stream including the AMET 211 is transferred to User Equipment (UE).

Referring to FIG. 2B, a first AMET 221 includes items 1 and 2, and a second AMET 222 includes items 3 and 4. The first AMET 221 and the second AMET 222 include identifiers, respectively. The identifier is included to allow UE to easily determine what is included in a relevant table. For example, the identifier of the first AMET 221 may be defined as '10011', and the identifier of the second AMET 222 may be defined as 11100'. The first AMET 221 and the second AMET 222 are multiplexed together with a video packet, an audio packet, etc. and included in a transmission stream. The transmission stream including the first AMET 221 and the second AMET 222 is transferred to UE. At this point, the AMETs 221 and 222 may be periodically transmitted depending on different time intervals, or transmitted when needed without a predetermined period, or a portion of them may be periodically transmitted and the rest of them may be transmitted when needed without a period. In the case where the AMETs 221 and 222 are transmitted when needed without a period, a relevant AMET may be transmitted as a performance instruction of audience measurement or may be transmitted when relevant information changes.

Referring to FIG. 2C, a first AMET 231 includes items 1 and 2, and a second AMET 232 includes an item 3, and a third AMET 233 includes an item 4. The first AMET 231, the second AMET 232, and the third AMET 233 include identifiers, respectively. The identifier is included to allow UE to easily determine what is included in a relevant table. For example, the identifier of the first AMET 231 may be defined as '00011', the identifier of the second AMET 232 may be defined as '00100', and the identifier of the third AMET 233 may be defined as '01000'. The first AMET 231, the second AMET 232, and the third AMET 233 are multiplexed together with a video packet, an audio packet, etc. and included in a transmission stream. The transmission stream including the first AMET 231, the second AMET 232, and the third AMET 233 is transferred to the UE. At this point, the AMETs 231, 232, and 233 may be periodically transmitted depending on different time intervals, or transmitted when needed without a predetermined period, or a portion of them may be periodically transmitted and the rest of them may be transmitted when needed without a period. In the case where the AMETs 231, 232, and 233 are transmitted when needed without a period, a relevant AMET may be transmitted as a performance instruction of audience measurement or may be transmitted when relevant information changes.

The present invention has described specific examples configuring audience measurement execution information with reference to FIGS. 2A to 2C. However, according to other embodiments of the present invention, the audience measurement execution information may be configured according to other structures besides the embodiments illustrated in FIGS. 2A to 2C, that is, a different number of AMETs or a different type of item distribution.

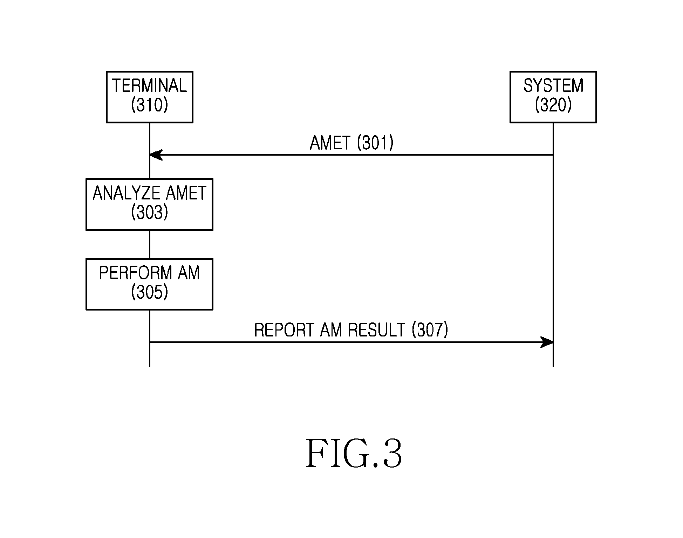

FIG. 3 illustrates signal exchange for indicating and performing audience measurement in a multimedia streaming system according to an embodiment of the present invention. In FIG. 3, a system 320 is a general name meaning at least one entity excluding a terminal 310 in a multimedia streaming system, and includes an entity for providing an AMET and an entity for providing information required for performing audience measurement.

Referring to FIG. 3, the system 320 transmits an AMET to the terminal 310 in step 301. In other words, the system 320 provides audience measurement execution information, that is, specific indicate information regarding execution of audience measurement. The AMET is a signaling table defined for transferring the audience measurement execution information. According to another embodiment of the present invention, the audience measurement execution information may be transferred as a portion of other signaling tables. According to still another embodiment of the present invention, the AMET may be divided into a plurality of tables including different items and transferred. For example, as illustrated in FIG. 2B, the AMET may be divided into a first AMET and a second AMET. For example, as illustrated in FIG. 2C, the AMET may be divided into a first AMET, a second AMET, and a third AMET.

In step 303, the terminal 310 that has received the AMET obtains the audience measurement execution information by analyzing the AMET. For example, the audience measurement execution information may include at least one of the items shown in Table 1. That is, the terminal obtains at least one information among business identify information, audience measurement object list information, an AM measurement item, an audience measurement result report method via the AMET.

In step 305, the terminal 310 that has obtained the audience measurement execution information performs audience measurement. Specifically, the terminal collects information of an item indicated by 'AM measurement item' information while viewing a service and contents indicated by the 'audience measurement object list' information obtained via the AMET.

In step 307, the terminal 310 transmits an audience measurement result report to the system 320. Specifically, the terminal 310 determines whether a report point arrives according to a reference indicated by the 'audience measurement result report method' information obtained via the AMET. For example, the report point defined by the 'audience measurement result report method' information may be one of right after audience measurement completion, a specific point randomly determined after the audience measurement completion, and a point at which a report request is received from the system 320. When the report point arrives, the terminal 310 generates a report message including information corresponding to a report item indicated by the 'audience measurement result report method', and transmits the report message to a destination indicated by the 'audience measurement result report method'.

In the signal exchange procedure illustrated in FIG. 3, the system 320 includes a first server for providing an AMET and a second server for receiving an audience measurement result report. Since the first server transmits a transmission stream including the AMET, it may be referred to as a 'streaming server'. Since the second server receives an audience measurement result report, it may be referred to as an 'audience measurement server'. Here, the first server and the second server, that is, the streaming server and the audience measurement server may be one entity, or separate entities different from each other. In the case where the first server and the second server are separate entities, step 301 may be performed between the first server and the terminal 310, and step 307 may be performed between the second server and the terminal 310. Also, in the case where the first server and the second server are separate entities, the first server may not possess the audience measurement execution information. In this case, signaling via which the first server receives audience measurement execution information from the second server may be performed.

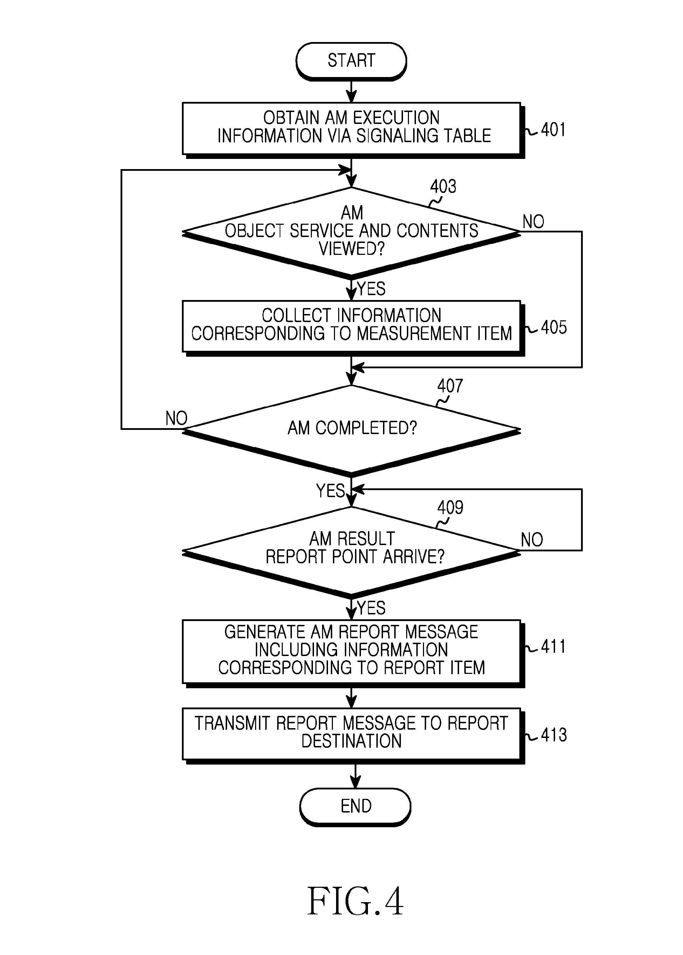

FIG. 4 illustrates a procedure for operating a terminal performing audience measurement in a multimedia streaming system according to an embodiment of the present invention.

Referring to FIG. 4, the terminal obtains audience measurement execution information via a signaling table in step 401. In other words, the terminal obtains the audience measurement execution information, that is, specific indicate information regarding execution of audience measurement via a signaling table included in a transmission stream including contents. According to an embodiment of the present invention, the audience measurement execution information may be received via at least one signaling table defined for transferring the audience measurement execution information. For example, the audience measurement execution information may be received via the methods illustrated in FIG. 2A, FIG. 2B, or FIG. 2C. In the case where the audience measurement execution information is divided into a plurality of signaling tables and received, the audience measurement execution information may be periodically received depending on different time intervals, or received when needed without a predetermined period, or a portion of the audience measurement execution information may be periodically received and the rest of the audience measurement execution information may be received when needed without a period. According to another embodiment of the present invention, the audience measurement execution information may be received as a portion of other signaling tables. For example, the audience measurement execution information may include at least one of the items shown in Table 1. In other words, the terminal obtains at least one of a business identifier, an audience measurement object list, an AM measurement item, and an audience measurement result report method.

After obtaining the audience measurement execution information, the terminal proceeds to step 403 to determine whether an audience measurement object service and contents are viewed. That is, the terminal determines whether a service and contents indicated by the 'audience measurement object list' information included in the audience measurement execution information are viewed. In other words, the terminal determines whether the service and contents indicated by the 'audience measurement object list' information coincide with a service and contents that are being viewed by a user currently.

When the audience measurement object service and the contents are viewed, the terminal proceeds to step 405 to collect information corresponding to a measurement item. That is, the terminal collects information of a measurement item indicated by the 'AM measurement item' information included in the audience measurement execution information. For example, the measurement item may include at least one of identify information of a user or a terminal, an audience measurement performance place, audience measurement object information, a viewing start time, a viewing time, and the number of time of viewing or a viewing frequency.

Subsequently, the terminal proceeds to step 407 to determine whether audience measurement is completed. A condition of whether the audience measurement is completed may be variously defined depending on a specific embodiment. For example, the audience measurement may be performed for a predetermined time from a point at which an audience measurement perform instruction is received. In this case, the terminal determines whether the audience measurement is completed depending on whether the predetermined time elapses. According to another embodiment of the present invention, broadcast end of specific contents may be defined as an ending condition of audience measurement. In this case, the terminal determines whether the audience measurement is completed depending on whether broadcasting of the specific contents ends. According to still another embodiment of the present invention, the audience measurement may be performed until a separate ending instruction occurs. In this case, the terminal determines whether the audience measurement is completed depending on whether an ending instruction is received from the system. When the audience measurement is not completed, the terminal returns to step 403.

In contrast, when the audience measurement is completed, the terminal proceeds to step 409 to determine whether a report point of the audience measurement result arrives. That is, the terminal determines whether the report point arrives depending on a reference indicated by 'audience measurement result report method' information included in the audience measurement execution information. For example, the report point defined by the 'audience measurement result report method' information may be one of right after the audience measurement completion, a specific point randomly determined after the audience measurement completion, and a point at which a report request is received from the system.

When the report point of the audience measurement result arrives, the terminal proceeds to step 411 to generate an audience measurement report message including information corresponding to a report item. That is, the terminal generates a report message including information corresponding to report items indicated by the 'audience measurement result report method' information included in the audience measurement execution information. The report items include a portion or all of the measurement items. The report message may include reporter information, for example, identify information of a terminal or a user.

After generating the report message, the terminal proceeds to step 413 to transmit the report message to a report destination, that is, an audience measurement server. That is, the terminal transmits the report message to a destination indicated by the 'audience measurement result report method' information included in the audience measurement execution information.

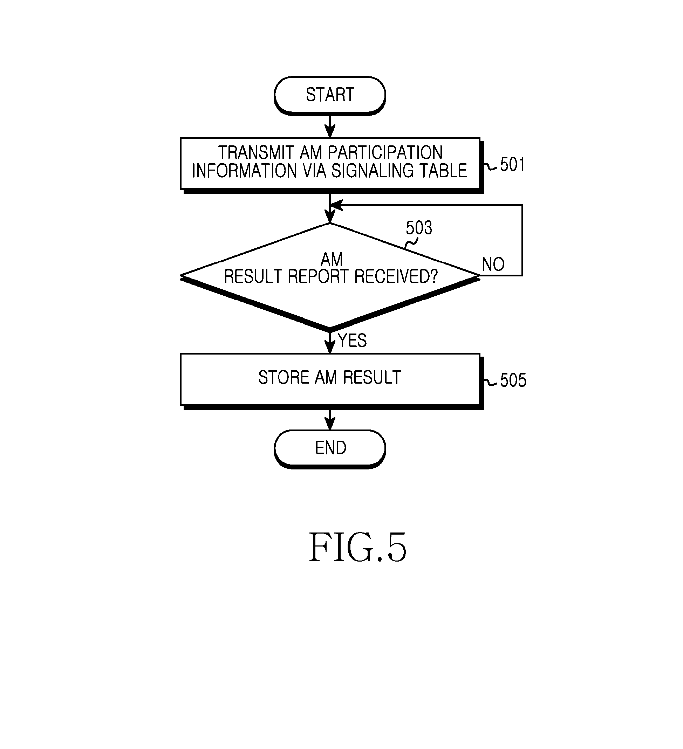

FIG. 5 illustrates a procedure for operating a server instructing audience measurement in a multimedia streaming system according to an embodiment of the present invention.

Referring to FIG. 5, the server transmits audience measurement execution information via a signaling table. In other words, the server generates at least one signaling table including the audience measurement execution information, that is, specific indicate information regarding execution of audience measurement. In addition, the server multiplexes the signaling table to incorporate the same into a transmission stream and transmits the transmission stream. According to an embodiment of the present invention, the audience measurement execution information may be transmitted via at least one signaling table defined for transferring the audience measurement execution information. For example, the audience measurement execution information may be transmitted via the methods illustrated in FIG. 2A, FIG. 2B, or FIG. 2C. In the case where the audience measurement execution information is divided into a plurality of signaling tables and transmitted, the audience measurement execution information may be periodically transmitted depending on different time intervals, or transmitted when needed without a predetermined period, or a portion of the audience measurement execution information may be periodically transmitted and the rest of the audience measurement execution information may be transmitted when needed without a period. According to another embodiment of the present invention, the audience measurement execution information may be transmitted as a portion of other signaling tables. For example, the audience measurement execution information may include at least one of the items shown in Table 1. In other words, the terminal transmits at least one of a business identifier, an audience measurement object list, an AM measurement item, and an audience measurement result report method.

After that, the server proceeds to step 503 to determine whether a report of an audience measurement result is received. In other words, the server determines whether an audience measurement report message is received. The report message includes information corresponding to report items indicated by the 'audience measurement result report method' information included in the audience measurement execution information. The report item includes a portion or all of measurement items indicated by the 'AM measurement item' information included in the audience measurement execution information. The report message may include reporter information, for example, identify information of a terminal or a user.

When the report of the audience measurement result is received, the server proceeds to step 505 to store the audience measurement result. After that, the audience measurement result may be utilized according to intention of a business supervising audience measurement or a system operator.

In the operation procedure illustrated in FIG. 5, the server includes a first server for providing audience measurement execution information and a second server for receiving an audience measurement result report. Since the first server transmits a transmission stream including the audience measurement execution information, it may be referred to as a 'streaming server'. Since the second server receives an audience measurement result report, it may be referred to as an 'audience measurement server'. Here, the first server and the second server, that is, the streaming server and the audience measurement server may be one entity, or separate entities different from each other. In the case where the first server and the second server are separate entities, step 501 may be performed by the first server and steps 503 and 505 may be performed by the second server. Also, in the case where the first server and the second server are separate entities, the first server may not possess the audience measurement execution information. In this case, signaling via which the first server receives audience measurement execution information from the second server may be performed.

According to an embodiment of the present invention, the above-described audience measurement may be performed. In addition, the present invention proposes an alternative for providing information required for performing audience measurement.

A transmission end according to an embodiment of the present invention may provide meta data regarding information required for performing audience measurement, that is, reference information for obtaining information required for performing audience measurement using a signaling table included in the transmission stream. In other words, the transmission end provides the reference information using the signaling table to a reception end that obtains system/service/program information via the signaling table. Hereinafter, for convenience in description, the present invention refers to 'reference information for obtaining information required for performing audience measurement' as 'AM joint information'. The AM joint information may be added to other signaling tables and transferred or may be transferred as one of newly defined tables. In the case where audience measurement participation information is transferred as a newly defined table, the table may be referred to as an 'Audience Measurement Joint Information Table (AMJIT)'. Hereinafter, for convenience in description, the present invention refers to the 'newly defined table for audience measurement participation information' as the 'AMJIT'. For example, the audience measurement participation information may be configured as in Table 5 below.

**<Table 5>**

| field | length | description |
|---|---|---|
| table identifier | 8bit | identifying information of AMJIT |
| version number | TBD | information of update history of AMJIT |
| source identifier (source ID) | variable | identify information of a subject providing the audience measurement participation information |
| audience measurement list (optional) | variable | identifying information of service or contents which are objects of audience measurement |
| audience measurement participation server address | variable | information for access to a server providing information required for audience measurement |

Referring to FIG. 5, a 'table identifier' field is information for identifying a relevant AMJIT. In the case where the AMJIT is used in a system conforming to an MPEG standard, the 'table identifier' field has a length of 8 bits according to the MPEG standard. The 'version number' field includes a variable increasing whenever the content of a relevant AMJIT changes and the length of the 'version number' field is determined depending on the validity range of an AMJIT defined by the system. The 'source identifier' field is a subject providing a relevant AMJIT. A broadcasting company or a contents provider, a third party performing audience measurement may serve as the subject. The 'source identifier' field may be set as a Uniform Resource Locator (URL) or a specific identifier. The length of the 'source identifier' field is determined depending on the specific form of the value of the 'source identifier' field. The 'audience measurement list' field is an optional field according to a specific embodiment. The 'audience measurement list' field provides identify information of a service or contents which are objects of audience measurement. The identify information of a service or contents which are objects of audience measurement may be provided via other signaling tables, for example, a PAT, a PMT, etc. The 'audience measurement participation server address' field provides an address of a server providing information required for performing the audience measurement, requested by a terminal which intends to perform audience measurement. Here, an AMJIT provider indicated by the 'source identifier' field and an operation subject of the server indicated by the 'audience measurement participation server address' field may be different from each other.

A reception end, that is, a terminal obtains the audience measurement participation information via the AMJIT as described above. Accordingly, the terminal requests the audience measurement participation server to transmit required information. For example, the audience measurement participation server provides information such as a procedure for obtaining a user's agreement, a method for reliably receiving information provided for audience measurement, etc.

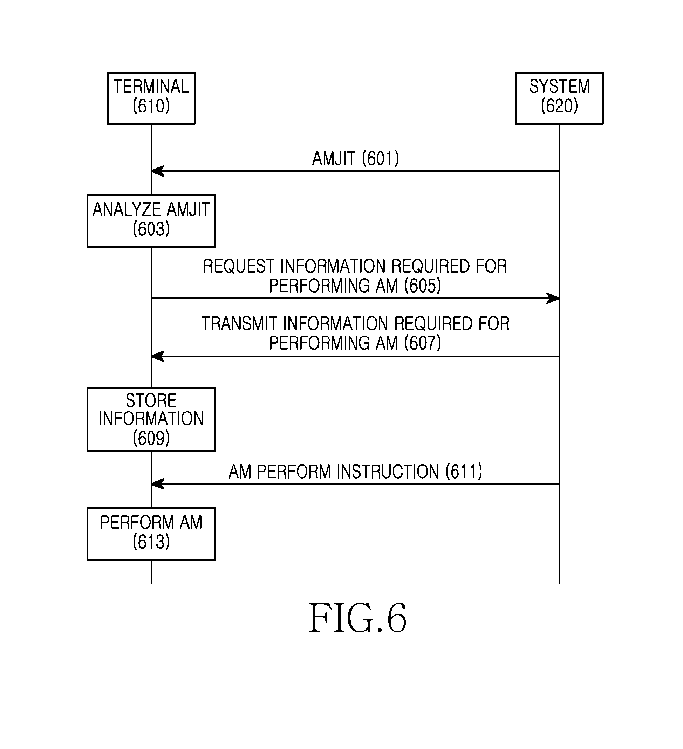

FIG. 6 illustrates a signal exchange procedure for providing information required for audience measurement in a multimedia streaming system according to an embodiment of the present invention. In FIG. 6, the system 620 is a general name meaning at least one entity excluding a terminal 610 in the multimedia streaming system, and includes an entity for providing an AMJIT and an entity for providing information required for performing audience measurement.

Referring to FIG. 6, the system 620 transmits the AMJIT to the terminal 610 in step 601. In other words, the system 620 provides audience measurement participation information, that is, reference information for obtaining information required for performing audience measurement. The AMJIT is a signaling table defined for transferring the audience measurement participation information. According to another embodiment of the present invention, the audience measurement participation information may be transferred as a portion of other signaling tables.

In step 603, the terminal 610 that has received the AMJIT obtains the audience measurement participation information by analyzing the AMJIT. For example, the audience measurement participation information may include at least one of fields shown in Table 5. That is, the terminal obtains at least one of identify information of the AMJIT, information informing update history of the AMJIT, identify information of a subject providing audience measurement participation information, identify information of a service and contents which are audience measurement objects, and information for accessing a server providing information required for audience measurement via the AMJIT.

In step 605, the terminal 610 determines to request information required for performing audience measurement and requests the system 620 to transmit the information required for performing audience measurement. That is, the terminal identifies a server providing the information required for the audience measurement using the information for accessing the server providing information required for audience measurement obtained via the AMJIT in step 603, and requests the server to transmit the required information. At this point, whether to perform a request for information required for performing the audience measurement may be determined by a user's instruction and may be determined according to a rule defined in advance. For example, to request information required for performing the audience measurement, the terminal 610 may transmit a message including fields shown in Table 6 below.

The apparatus of claim 33, wherein the request message comprises: at least one of identify information of a terminal transmitting the request message, identity information of the audience measurement participation information corresponding to the requested information, a seed of an encryption key to be applied to the response message, and an address of the terminal transmitting the request message, and
the response message is encrypted using an encryption key generated based on a seed value included in the request message and comprises: at least one of identify information of a server transmitting the response message, identify information of corresponding audience measurement participation information, a destination address of an agreement message, an encryption key, and an address of a terminal that has requested the information required for performing the audience measurement.

**<Table 6>**

| field | length | description |
|---|---|---|
| terminal identifier | variable | identifying information identifying terminal or user |
| AMJIT identifier | variable | AMJIT identifying information for audience measurement required by a terminal |
| terminal encryption seed | variable | a seed of an encryption key to be applied to the response message when responding to a terminal |
| terminal address | variable | IP address, phone number, etc. |

In step 607, the system 620 requested to transmit the information required for performing the audience measurement authenticates the terminal 610 using the identify information of the terminal 610 included in the message received in step 605, in other words, determines whether the terminal 610 is an authenticated user, and transmits information required for performing the audience measurement requested by the terminal 610. In the case where a subject performing authentication for the terminal 610 and a subject providing information required for performing the audience measurement are different from each other, a procedure for allowing the server to request the subject performing the authentication to authenticate the terminal 610 and allowing the server to receive an authentication result may be performed. At this point, the system 620 may generate an encryption key using seed information included in the message received in step 605, and encrypt information required for performing the audience measurement transferred to the terminal 610 using the encryption key. For example, the encryption key may be generated according to Diffie-helman algorithm. The information required for performing the audience measurement may include security related information. For example, the requested information may be configured as in Table 7 below.

**<Table 7>**

| field | length | description |
|---|---|---|
| server identifier | variable | identifying information for identifying a server |
| AMJIT identifier | variable | identifying information of AMJIT requested by terminal |
| | | to identify whether it is a response to AMJIT requested by a terminal |
| server address for transmitting agreement message (Optional) | variable | server address for being informed whether there is an agreement for audience measurement from a user |
| audience measurement information encryption key | variable | an encryption key to be applied to the audience measurement related information transmitted by a system |
| terminal address | variable | address, phone number, etc. |

In Table 7, the 'server address to transmit agreement message' field is an optional field. This field contains the address of a server which is a destination to which an agreement message for the audience measurement is to be transmitted in the case where a user has not agreed to the audience measurement in advance.

An encryption key included in the 'audience measurement information encryption key' field may be used for the following purpose. According to an embodiment of the present invention, in the case where a user has not agreed to the audience measurement in advance, the encryption key may be a key value to use for encrypting the agreement message. According to another embodiment of the present invention, the encryption key may be a key value required for decrypting audience measurement related information to be received by the terminal 610 in the case where the user has agreed to the audience measurement in advance. At this point, the valid range of the key value may be all audience measurement related information or may be limited to audience measurement related information of a specific service or contents. In the case where the key value is limited to the specific service or contents, a plurality of encryption keys may be used. According to still another embodiment of the present invention, the encryption key may be a key value used for encrypting an audience measurement result of the terminal 610. According to further another embodiment of the present invention, the encryption key may be a key value to use for verifying integrity of audience measurement related information.

In step 609, the terminal 610 that has received the information required for performing the audience measurement stores the provided information. At this point, in the case where the information required for performing the audience measurement is encrypted, the terminal 610 performs decoding using the seed information included in the message transmitted in step 605. Particularly, the terminal 610 stores security related information, for example, an encryption key value to be used for agreement message encryption afterward, decoding of audience measurement related information, audience measurement result encryption, audience measurement related information integrity test, etc.

In step 611, the system 620 instructs the terminal 610 to perform the audience measurement. At this point, the system 620 may inform the terminal 610 of a specific item of the audience measurement. In step 613, the terminal 610 performs the audience measurement. After that, though not shown, the terminal 610 transmits a performance result of the audience measurement to the system 620.

In the signal exchange procedure illustrated in FIG. 6, the system 620 includes a first entity providing an AMJIT and a second entity providing information required for performing audience measurement. Since the first entity transmits a transmission stream including the AMJIT, it may be referred to as a 'streaming server'. Since the second entity provides information required for performing audience measurement, it may be referred to as an 'audience measurement participation server'. Here, the first entity and the second entity may be one entity, or separate entities different from each other. In the case where the first entity and the second entity are separate entities, step 601 may be performed between the first entity and the terminal 610, and steps 605, 607, and 611 may be performed between the second entity and the terminal 610. Also, in the case where the first entity and the second entity are separate entities, when requested information required for performing audience measurement by the terminal 610, the second entity may request the first entity to authenticate the terminal 610.

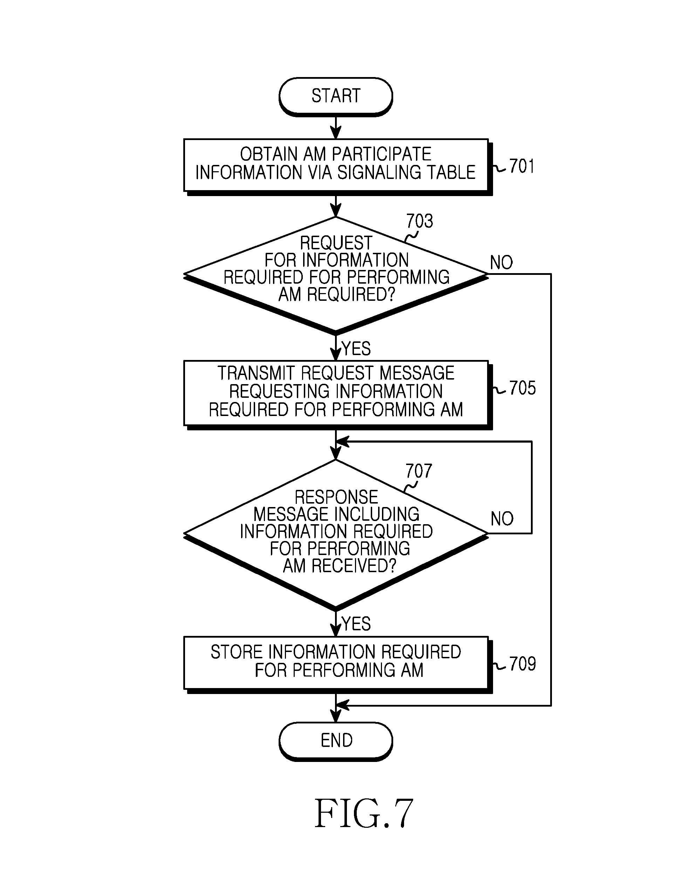

FIG. 7 illustrates a procedure for operating a terminal obtaining audience measurement related information in a multimedia streaming system according to an embodiment of the present invention.

Referring to FIG. 7, the terminal obtains audience measurement participation information via a signaling table in step 701. In other words, the terminal obtains the audience measurement participation information, that is, reference information for obtaining information required for performing audience measurement via a signaling table included in a transmission stream including contents. According to an embodiment of the present invention, the audience measurement participation information may be received via a signaling table defined for transferring the audience measurement participation information. According to another embodiment of the present invention, the audience measurement participation information may be received as a portion of other signaling tables. For example, the audience measurement participation information may include at least one of fields shown in Table 5. That is, the terminal obtains at least one of identify information of the audience measurement participation information, information informing update history of the audience measurement participation information, identify information of a subject providing the audience measurement participation information, identify information of a service and contents which are audience measurement objects, and information for accessing a server providing information required for audience measurement.

After obtaining the audience measurement participation information, the terminal proceeds to step 703 to determine whether to request information required for performing the audience measurement. Whether to request the information required for performing the audience measurement may be determined by a user's instruction and may be determined according to a rule defined in advance. For example, the terminal may display a screen querying whether to participate in the audience measurement via a display unit provided for the user's recognition, and determine the user's instruction.

When determining to request the information required for performing the audience measurement, the terminal proceeds to step 705 to transmit a request message requesting the information required for performing the audience measurement. At this point, the terminal may identify an audience measurement participation server which is a destination of the request message using the audience measurement participation information obtained in step 701. The audience measurement participation server and the streaming server that transmit the signaling table may be the same or different from each other. For example, the request message may include at least one of fields shown in Table 6. That is, the request message may include at least one of identify information of the terminal transmitting the request message, identify information of audience measurement participation information corresponding to the requested information, the seed of an encryption key to be applied to a response message, and the address of the terminal transmitting the request message.

After that, the terminal proceeds to step 707 to determine whether a response message including the information required for performing audience measurement is received. At this point, the response message may be encrypted by an encryption key generated based on the seed included in the message transmitted in step 705 and received. The encryption key may be generated according to a prescribed algorithm, for example, a Diffie-helman algorithm. Also, the response message may include security related information. In this case, the terminal generates an encryption key based on the seed, and decodes the response message using the encryption key. For example, the response message may include at least one of fields shown in Table 7. That is, the response message may include at least one of identify information of a server transmitting the response message, identify information of corresponding audience measurement participation information, the destination address of an agreement message, an encryption key, and the address of a terminal that has requested the information required for performing the audience measurement.

When the response message is received, the terminal proceeds to step 709 to store the information required for performing the audience measurement included in the response message. Particularly, the terminal stores security related information, for example, an encryption key value to be used for agreement message encryption afterward, decoding of audience measurement related information, audience measurement result encryption, audience measurement related information integrity test, etc.

After that, though not illustrated, when receiving an audience measurement performance instruction including a specific item of the audience measurement, the terminal performs audience measurement. In addition, a destination that receives a performance result of the audience measurement may be the streaming server or the audience measurement participation server or other servers collecting audience measurement performance results.

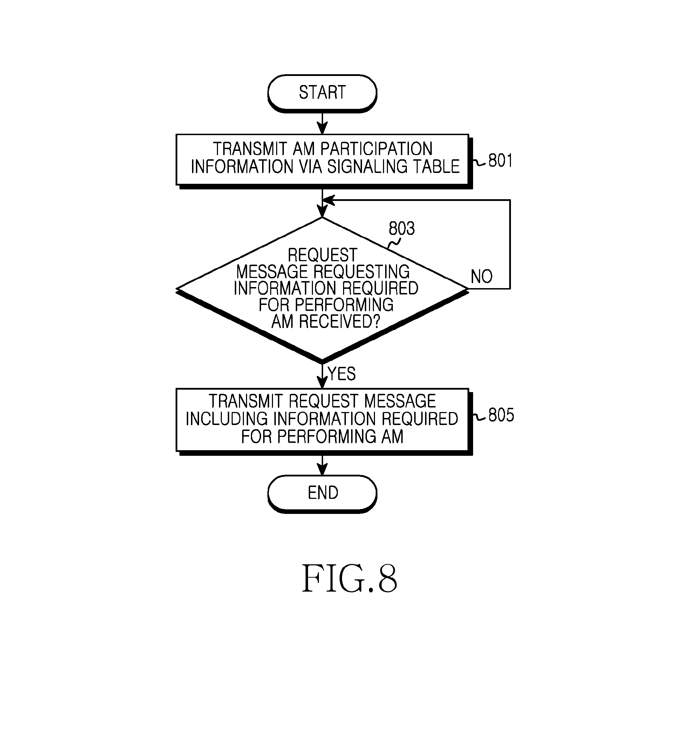

FIG. 8 illustrates a procedure for operating an audience measurement related information provider in a multimedia streaming system according to an embodiment of the present invention. The audience measurement related information provider includes both an entity providing the AMJIT and an entity providing information required for performing the audience measurement. Hereinafter, for convenience in description, the present invention refers to the 'audience measurement related information provider' as a 'provider'.

Referring to FIG. 8, the provider transmits audience measurement participation information via a signaling table. In other words, the provider generates a signaling table including the audience measurement participation information, that is, reference information for obtaining information required for performing the audience measurement, multiplexes the signaling table to incorporate the same into a transmission stream and transmits the transmission stream. According to an embodiment of the present invention, the audience measurement participation information may be transmitted via a signaling table defined for transferring the audience measurement participation information. According to another embodiment of the present invention, the audience measurement participation information may be transmitted as a portion of other signaling tables. For example, the audience measurement participation information may include at least one of fields shown in Table 5. That is, the provider transmits at least one of identify information of the audience measurement participation information, information informing update history of the audience measurement participation information, identify information of a subject providing the audience measurement participation information, identify information of a service and contents which are audience measurement objects, and information for accessing a server providing information required for audience measurement.

After that, the provider proceeds to step 803 to determine whether a request message requesting information required for performing the audience measurement is received. For example, the request message may include at least one of fields shown in Table 6. That is, the request message may include at least one of identify information of the terminal transmitting the request message, identify information of audience measurement participation information corresponding to the requested information, the seed of an encryption key to be applied to a response message, and the address of the terminal transmitting the request message.

When the request message is received, the provider proceeds to step 805 to authenticate the terminal using the identify information of the terminal that has transmitted the request message included in the message, and transmits a response message including the information required for performing the audience measurement. When an entity performing authentication of the terminal and the provider are different from each other, the provider may request the entity performing the authentication to authenticate the terminal, and receive an authentication result. At this point, the provider may generate an encryption key using the seed information included in the request message received in step 803, and encrypt the response message transferred to the terminal using the encryption key. For example, the encryption key may be generated according to the Diffie-helman algorithm. Also, the response message may include security related information. For example, the response message may include at least one of fields shown in Table 7. That is, the response message may include at least one of identify information of a server transmitting the response message, identify information of corresponding audience measurement participation information, the destination address of an agreement message, an encryption key, and the address of a terminal that has requested the information required for performing the audience measurement.

According to an embodiment of the present invention, the streaming server providing the audience measurement participation information and the audience measurement participation server providing information required for performing the audience measurement may be one entity, or separate entities different from each other. In the case where the streaming server and the audience measurement participation server are separate entities, step 801 may be performed by the streaming server, and steps 803 and 805 may be performed by the audience measurement participation server. Also, in the case where the streaming server and the audience measurement participation server are separate entities, after step 803, the audience measurement participation server may request the streaming server or a separate authentication server to authenticate the relevant terminal.

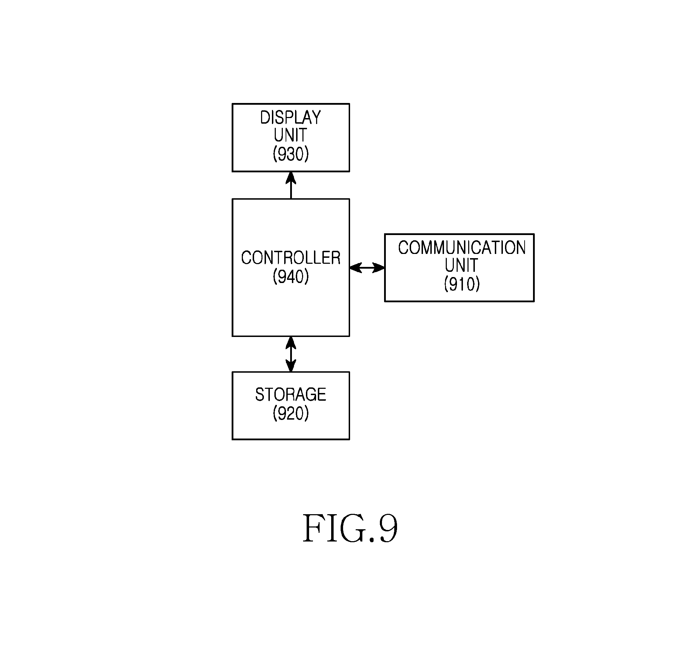

FIG. 9 is a block diagram of a terminal in a multimedia streaming system according to an embodiment of the present invention.

As illustrated in FIG. 9, the terminal includes a communication unit 910, a storage 920, a display unit 930, and a controller 940

The communication unit 910 recovers reception data from a signal received via a channel, converts transmission data to a signal, and transmits the same via the channel. The reception data includes a transmission stream including audio/video contents and control information. Particularly, the control information includes a signaling table. The signaling table may be defined in various forms depending on each purpose. For example, at least one table may be defined for the purpose of transferring audience measurement execution information, that is, specific indicate information for execution of audience measurement. Also, a specific one table may be defined to include reference information for obtaining information required for performing the audience measurement. The channel may be a wired channel or a radio channel. In case of the radio channel, the communication unit 910 converts a Radio Frequency (RF) signal received via an antenna to a baseband signal, processes a physical layer according to the standard of the communication system, and recovers a bit line via demodulation.

The storage 920 stores a basic program for operating the terminal, setting information required for communication, a program for a user interface, setting information, etc. In addition, the storage 920 provides stored data under control of the controller 940. The display unit 930 displays status information occurring during an operation of the terminal and numbers, characters, images, etc. occurring during execution of an application. For example, the display unit 930 displays image contents. That is, the display unit 930 displays image data provided from the controller 940 via a visual screen. For example, the display unit 930 may be a Liquid Crystal Display (LCD), an Organic Light-Emitting Diode (OLED), etc. Though not shown, the terminal may further include a speaker for outputting an audio, a speaker terminal that may connect to an external speaker unit, etc.

The controller 940 controls overall functions of the terminal. For example, the controller 940 generates image data from steaming data received via the communication unit 910, and provides the image data to the display unit 930. Particularly, according to an embodiment of the present invention, the controller 940 controls functions for performing audience measurement.

For example, the controller 940 operates to perform the procedure illustrated in FIG. 4 so that it may operate like the terminal illustrated in FIG. 3. Specific description is as follows. The operation of the controller 940 for performing the audience measurement is described below. The controller 940 obtains audience measurement participation information via a signaling table included in a transmission stream received via the communication unit 910, and stores the audience measurement participation information in the storage 920. Here, the audience measurement participation information may be received via at least one signaling table defined for transferring the audience measurement participation information or as a portion of other signaling tables. For example, the audience measurement participation information may be received via the methods of FIG. 2A, 2B, or 2C. For example, the audience measurement participation information may include at least one of fields shown in Table 1.

After that, when the audience measurement object service and contents are viewed, the controller 940 proceeds to step 405 to collect information of an measurement item indicated by 'AM measurement item' information included in the audience measurement execution information. When the audience measurement is completed, the controller 940 determines whether a report point arrives according to a reference indicated by 'audience measurement result report method' included in the audience measurement execution information. When the report point of the audience measurement result arrives, the controller 940 generates a report message including information corresponding to a report item indicated by 'audience measurement result report method' information included in the audience measurement execution information. In addition, the controller 940 transmits the report message to a destination indicated by the 'audience measurement result report method' information included in the audience measurement execution information via the communication unit 510.

For example, the controller 940 operates to perform the procedure illustrated in FIG. 7 so that it may operate like the terminal illustrated in FIG. 6. Specific description is as follows. The operation of the controller 940 for performing the audience measurement is described below. The controller 940 obtains audience measurement participation information via a signaling table included in a transmission stream received via the communication unit 910. Here, the audience measurement participation information may be received via a signaling table defined for transferring the audience measurement participation information, or received as a portion of other signaling tables. For example, the audience measurement participation information may include at least one of fields shown in Table 5. The controller 940 stores the audience measurement participation information in the storage 920, and determines whether to request information required for performing the audience measurement. Whether to request the information required for performing the audience measurement may be determined by a user's instruction and may be determined according to a rule defined in advance. For example, the controller 940 may display a screen querying whether to participate in the audience measurement via a display unit 930, and determine the user's instruction.

When determining to request the information required for performing the audience measurement, the controller 940 generates a request message requesting the information required for performing the audience measurement, and transmits the request message via the communication unit 910. At this point, the controller 940 may identify an audience measurement participation server which is a destination of the request message using the audience measurement participation information stored in the storage 920. For example, the request message may include at least one of fields shown in Table 6. After that, the controller 940 receives a response message including the information required for performing the audience measurement via the communication unit 910. The response message may be encrypted by an encryption key generated based on the seed included in the request message and received. In this case, the controller 940 generates the encryption key based on the seed and decodes the response message using the encryption key. Also, the response message may include security related information. For example, the response message may include at least one of fields shown in Table 7. In addition, the controller 940 stores the information required for performing the audience measurement in the storage 920.

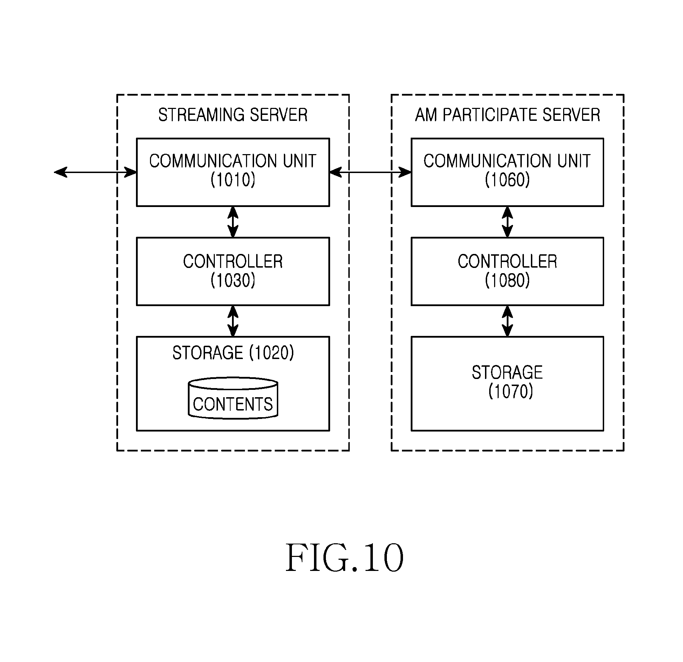

FIG. 10 is a block diagram illustrating a streaming server and an audience measurement participation server in a multimedia streaming system according to an embodiment of the present invention.

As illustrated in FIG. 10, the streaming server includes a communication unit 1010, a storage 1020, and a controller 1030. The audience measurement participation server includes a communication unit 1060, a storage 1070, and a controller 1080.

The communication unit 1010 of the streaming server provides an interface for performing communication with other entities inside a network. The storage 1020 of the streaming server stores a basic program for operating the streaming server, and particularly stores contents to be provided to terminals.

The controller 1030 of the streaming server controls overall functions of the streaming server. For example, the controller 1030 transmits contents to terminals via the communication unit 1010. According to an embodiment of the present invention, the controller 1030 performs a function related to the audience measurement, particularly, a function for providing audience measurement participation information.

For example, the controller 1030 operates to perform a portion or all of operations of the system of FIG. 3 or a portion or all of the procedure illustrated in FIG. 5. Specific description is as follows. The operation of the controller 1030 for performing the function related to the audience measurement is described below. The controller 1030 generates at least one signaling table including the audience measurement execution information, that is, specific indicate information regarding execution of the audience measurement, multiplexes the signaling table to incorporate the same into a transmission stream, and transmits the transmission stream via the communication unit 1010. According to an embodiment of the present invention, the audience measurement execution information may be transmitted via at least one signaling table defined for transferring the audience measurement execution information. For example, the audience measurement execution information may be transmitted using the methods of FIG. 2A, 2B, or 2C. According to another embodiment of the present invention, the audience measurement execution information may be transmitted as a portion of other signaling tables. For example, the audience measurement execution information may include at least one of items shown in Table 1.

For example, the controller 1030 operates to perform a portion or all of operations of the system of FIG. 6 or a portion or all of the procedure illustrated in FIG. 8. Specific description is as follows. The operation of the controller 1030 for performing the function related to the audience measurement is described below. The controller 1030 generates a signaling table including the audience measurement participation information, that is, reference information for obtaining information required for performing the audience measurement, multiplexes the signaling table to incorporate the same into a transmission stream, and transmits the transmission stream via the communication unit 1010. According to an embodiment of the present invention, the audience measurement participation information may be transmitted via a signaling table defined for transferring the audience measurement participation information or as a portion of other signaling tables. For example, the audience measurement participation information may include at least one of items shown in Table 5.

According to an embodiment of the present invention, the streaming server may manage the authentication information of the terminal. In this case, when authentication of the terminal is requested by the audience measurement participation server that has been requested to transmit information required for performing audience measurement by the terminal, the controller 1030 determines whether the terminal is an authenticated user and informs the audience measurement participation server of the determination result.

The communication unit 1060 of the audience measurement server provides an interface for performing communication with other entities inside a network. The storage 1070 of the audience measurement server stores a basic program for operating the audience measurement server. Particularly, the storage 1070 may store an audience measurement result reported by terminals. Also, the storage 1070 may store information required for performing the audience measurement, for example, the address of a destination server of an agreement message representing whether a user agrees to the audience measurement, an encryption key for encrypting audience measurement related information, etc.

The controller 1080 of the audience measurement server controls overall functions of the audience measurement server. Particularly, according to an embodiment of the present invention, the controller 1080 controls a function for providing information required for performing audience measurement.

For example, the controller 1080 operates to perform a portion of the operations of the system of FIG. 3 or a portion of the procedure illustrated in FIG. 5. Specific description is as follows. When a report of an audience measurement result is received from the terminal via the communication unit 1060, the controller 1080 stores the audience measurement result in the storage 1070. That is, when an audience measurement report message is received from the terminal, the controller 1080 extracts information corresponding to a report item of the audience measurement from the report message, and stores the extracted information in the storage 1070. The report message may include reporter information, for example, identify information of a terminal or a user. After that, the audience measurement result may be utilized according to intention of a business supervising audience measurement or a system operator.

For example, the controller 1080 operates to perform a portion of the operations of the system of FIG. 6 or a portion of the procedure illustrated in FIG. 8. Specific description is as follows. The operation of the controller 1080 for providing information required for performing the audience measurement is described below. The controller 1080 recognizes information required for performing the audience measurement is requested by the terminal via a request message received via the communication unit 1060. For example, the request message may include at least one of fields shown in Table 6. When the request message is received, the controller 1080 identifies the terminal using identify information of the terminal that has transmitted the request message included in the message, and requests the streaming server or a separate authentication server to authenticate the terminal. When determining the terminal is an authenticated user, the controller 1080 generates a response message including information required for performing the audience measurement, and transmits the response message via the communication unit 1060. At this point, the controller 1080 may generate an encryption key using seed information included in the request message, and encrypt the response message transferred to the terminal using the encryption key. Also, the response message may include security related information. For example, the response message may include at least one of fields shown in Table 7.

In the construction illustrated in FIG. 10, the streaming server and the audience measurement server have been illustrated as separate entities. However, according to another embodiment of the present invention, the audience measurement participation server may be included in the streaming server. In this case, the operation of the controller 1080 of the audience measurement participation server may be performed by the controller 1030 of the streaming server.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

## Claims

1. A method for operating a terminal in a multimedia streaming system, the method comprising:
receiving a transmission stream comprising contents; and
obtaining at least one of audience measurement participation information and audience measurement execution information from at least one signaling table included in the transmission stream.

2. The method of claim 1, wherein the at least one signaling table comprises at least one of identify information regarding a business requiring audience measurement, information regarding object service and contents to which the audience measurement is to be applied, information regarding a measurement item on which the audience measurement is to be performed, and information indicating a result report method after the audience measurement.

3. The method of claim 2, wherein the at least one signaling table comprises an identifier for informing an information item included in each table.

4. The method of claim 2, wherein the measurement item comprises at least one of identify information of a user or a terminal, an audience measurement performance place, audience measurement object information, a viewing start time, a viewing time, and the number of times of viewing or a viewing frequency.

5. The method of claim 2, further comprising:
when the audience measurement object service and contents indicated by the audience measurement execution information are viewed, collecting information of a measurement item indicated by the audience measurement execution information;
when the audience measurement is completed, determining whether a report point of an audience measurement result arrives according to a reference indicated by the audience measurement execution information; and
when the report point arrives, transmitting information corresponding to a report item indicated by the audience measurement execution information to a destination indicated by the audience measurement execution information.

6. The method of claim 5, wherein the report point defined by the audience measurement execution information comprises one of right after completion of the audience measurement, a specific point randomly determined after completion of the audience measurement, and a point at which a report request is received from the system.

7. The method of claim 1, wherein the at least one signaling table comprises at least one of identify information of the audience measurement participation information, information informing update history of the audience measurement participation information, identify information of a subject providing the audience measurement participation information, identify information of a service and contents which are audience measurement objects, and information for accessing a server providing information required for the audience measurement.

8. The method of claim 1, further comprising:
transmitting a request message requesting information required for performing audience measurement; and
receiving a response message comprising information required for performing the audience measurement.

9. The method of claim 8, wherein the request message comprises: at least one of identify information of a terminal transmitting the request message, identity information of the audience measurement participation information corresponding to the requested information, a seed of an encryption key to be applied to the response message, and an address of the terminal transmitting the request message, and
the response message is encrypted using the encryption key generated based on a seed value included in the request message and comprises: at least one of identify information of a server transmitting the response message, identify information of corresponding audience measurement participation information, a destination address of an agreement message, the encryption key, and an address of a terminal that has requested the information required for performing the audience measurement.

10. A method for operating a server in a multimedia streaming system, the method comprising:
generating at least one signaling table comprising at least one of audience measurement participation information and audience measurement execution information;
generating a transmission stream comprising at least one signaling table; and
transmitting the transmission stream.

11. The method of claim 10, wherein the at least one signaling table comprises at least one of identify information regarding a business requiring audience measurement, information regarding object service and contents to which the audience measurement is to be applied, information regarding a measurement item on which the audience measurement is to be performed, and information indicating a result report method after the audience measurement.

12. The method of claim 11, wherein the at least one signaling table comprises an identifier for informing an information item included in each table.

13. The method of claim 11, wherein the measurement item comprises at least one of identify information of a user or a terminal, an audience measurement performance place, audience measurement object information, a viewing start time, a viewing time, and the number of times of viewing or a viewing frequency.

14. The method of claim 11, wherein the information indicating the result report method after the audience measurement comprises information defining a report point of the audience measurement result, and
the report point defined by the audience measurement execution information comprises one of right after completion of the audience measurement, a specific point randomly determined after completion of the audience measurement, and a point at which a report request is received from the system.

15. The method of claim 10, wherein the at least one signaling table comprises at least one of identify information of the audience measurement participation information, information informing update history of the audience measurement participation information, identify information of a subject providing the audience measurement participation information, identify information of a service and contents which are audience measurement objects, and information for accessing a server providing information required for the audience measurement.

16. The method of claim 10, further comprising:
receiving a request message requesting information required for performing audience measurement; and
transmitting a response message comprising information required for performing the audience measurement.

17. The method of claim 16, wherein the request message comprises: at least one of identify information of a terminal transmitting the request message, identity information of the audience measurement participation information corresponding to the requested information, a seed of an encryption key to be applied to the response message, and an address of the terminal transmitting the request message, and
the response message is encrypted using the encryption key generated based on a seed value included in the request message and comprises: at least one of identify information of a server transmitting the response message, identify information of corresponding audience measurement participation information, a destination address of an agreement message, the encryption key, and an address of a terminal that has requested the information required for performing the audience measurement.

18. A terminal apparatus in a multimedia streaming system, the apparatus comprising:
a communication unit for receiving a transmission stream comprising contents; and
a controller for obtaining at least one of audience measurement participation information and audience measurement execution information from at least one signaling table included in the transmission stream.

19. The apparatus of claim 18, wherein the at least one signaling table comprises at least one of identify information regarding a business requiring audience measurement, information regarding object service and contents to which the audience measurement is to be applied, information regarding a measurement item on which the audience measurement is to be performed, and information indicating a result report device after the audience measurement.

20. The apparatus of claim 19, wherein the at least one signaling table comprises an identifier for informing an information item included in each table.

21. The apparatus of claim 19, wherein the measurement item comprises at least one of identify information of a user or a terminal, an audience measurement performance place, audience measurement object information, a viewing start time, a viewing time, and the number of times of viewing or a viewing frequency.

22. The apparatus of claim 19, wherein when the audience measurement object service and contents indicated by the audience measurement execution information are viewed, the controller controls to collect information of a measurement item indicated by the audience measurement execution information,
when the audience measurement is completed, the controller controls to determine whether a report point of an audience measurement result arrives according to a reference indicated by the audience measurement execution information, and
when the report point arrives, the controller controls to transmit information corresponding to a report item indicated by the audience measurement execution information to a destination indicated by the audience measurement execution information.

23. The apparatus of claim 22, wherein the report point defined by the audience measurement execution information comprises one of right after completion of the audience measurement, a specific point randomly determined after completion of the audience measurement, and a point at which a report request is received from the system.

24. The apparatus of claim 18, wherein the at least one signaling table comprises at least one of identify information of the audience measurement participation information, information informing update history of the audience measurement participation information, identify information of a subject providing the audience measurement participation information, identify information of a service and contents which are audience measurement objects, and information for accessing a server providing information required for the audience measurement.

25. The apparatus of claim 18, wherein the communication unit transmits a request message requesting information required for performing audience measurement, and receives a response message comprising information required for performing the audience measurement.

26. The apparatus of claim 25, wherein the request message comprises: at least one of identify information of a terminal transmitting the request message, identity information of the audience measurement participation information corresponding to the requested information, a seed of an encryption key to be applied to the response message, and an address of the terminal transmitting the request message, and
the response message is encrypted using the encryption key generated based on a seed value included in the request message and comprises: at least one of identify information of a server transmitting the response message, identify information of corresponding audience measurement participation information, a destination address of an agreement message, the encryption key, and an address of a terminal that has requested the information required for performing the audience measurement.

27. An operation apparatus of a server in a multimedia streaming system, the operation apparatus comprising:
a controller for generating at least one signaling table comprising at least one of audience measurement participation information and audience measurement execution information, and generating a transmission stream comprising at least one signaling table; and
a communication unit for transmitting the transmission stream.

28. The apparatus of claim 27, wherein the at least one signaling table comprises at least one of identify information regarding a business requiring audience measurement, information regarding object service and contents to which the audience measurement is to be applied, information regarding a measurement item on which the audience measurement is to be performed, and information indicating a result report device after the audience measurement.

29. The apparatus of claim 28, wherein the at least one signaling table comprises an identifier for informing an information item included in each table.

30. The apparatus of claim 28, wherein the measurement item comprises at least one of identify information of a user or a terminal, an audience measurement performance place, audience measurement object information, a viewing start time, a viewing time, and the number of times of viewing or a viewing frequency.

31. The apparatus of claim 28, wherein the information indicating the result report device after the audience measurement comprises information defining a report point of the audience measurement result, and
the report point defined by the audience measurement execution information comprises one of right after completion of the audience measurement, a specific point randomly determined after completion of the audience measurement, and a point at which a report request is received from the system.

32. The apparatus of claim 27, wherein the at least one signaling table comprises at least one of identify information of the audience measurement participation information, information informing update history of the audience measurement participation information, identify information of a subject providing the audience measurement participation information, identify information of a service and contents which are audience measurement objects, and information for accessing a server providing information required for the audience measurement.

33. The apparatus of claim 27, wherein the communication unit receives a request message requesting information required for performing audience measurement, and transmits a response message comprising information required for performing the audience measurement.

34. The apparatus of claim 33, wherein the request message comprises: at least one of identify information of a terminal transmitting the request message, identity information of the audience measurement participation information corresponding to the requested information, a seed of an encryption key to be applied to the response message, and an address of the terminal transmitting the request message, and
the response message is encrypted using an encryption key generated based on a seed value included in the request message and comprises: at least one of identify information of a server transmitting the response message, identify information of corresponding audience measurement participation information, a destination address of an agreement message, an encryption key, and an address of a terminal that has requested the information required for performing the audience measurement.
